Europäisches Patentamt

European Patent Office

Office européen des brevets

(11) Veröffentlichungsnummer: **0 336 006**
**A2**

## (12) EUROPÄISCHE PATENTANMELDUNG

(21) Anmeldenummer: 88114175.8

(22) Anmeldetag: 31.08.88

(51) Int. Cl.⁴: **H02G 3/22**

(30) Priorität: 06.04.88 DE 3811442

(43) Veröffentlichungstag der Anmeldung:
**11.10.89 Patentblatt 89/41**

(84) Benannte Vertragsstaaten:
**AT BE CH DE ES FR GB IT LI NL SE**

(71) Anmelder: **PLASTOFORM GMBH & CO. KG**
**Burgstrasse 25**
**D-4973 Vlotho(DE)**

(72) Erfinder: **Hauff, Werner**
**Herlsbühlstrasse 19**
**D-7925 Ballmertshofen(DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**D-7900 Ulm/Donau(DE)**

(54) **Mauerdurchführung.**

(57) Die Mauerduchführung besteht aus einem Futterrohr (1), einer Packung (2) zum Ausfüllen des Ringraumes zwischen dem Futterrohr (1) und der Wandung des Mauerdurchbruchs und mit zwei axial beidseits der Packung (2) auf dem Futterrohr (1) sitzenden Flanschen (3, 4), von denen der eine Flansch (3) außerhalb des Mauerdurchbruchs angeordnet und zur Abdichtung gegen die Außenseite der Mauer eingerichtet und der andere Flansch (4) zum axialen Verpressen der Packung (2) innerhalb des Mauerdurchbruchs verschiebbar angeordnet und gegen den axialen Druck der Packung (2) abgestützt ist. Dazu ermöglicht eine Sperreinrichtung die Verschiebungen des Flansches (4) auf dem Futterrohr (1) nur in Richtung zur Packung (2) hin. Der innere Flansch (4) ist an ein Zugmittel (25) angeschlossen, das zwischen dem Futterrohr (1) einerseits und der Packung (2) sowie dem äußeren Flansch (3) anderseits abgedichtet und axial beweglich nach außen geführt ist und der Außenseite vor dem äußeren Flansch (3) zugänglich ist. Durch Zug von Hand am Zugmittel (25) kann der Flansch (4) gegen die Packung (2) bewegt und die Packung (2) vorgestaucht werden.

Fig 1

EP 0 336 006 A2

## Mauerdurchführung

Die Erfindung betrifft eine Mauerdurchführung für Leitungen, wie Kabel, Rohre oder dergleichen, zum Einsetzen in einen Mauerdurchbruch, mit einem den Mauerdurchbruch durchgreifenden Futterrohr, einer Packung zum Ausfüllen des Ringraumes zwischen dem Futterrohr und der Wandung des Mauerdurchbruchs und mit zwei axial beidseits der Packung auf dem Futterrohr sitzenden Flanschen, von denen der eine Flansch außerhalb des Mauerdurchbruchs angeordnet und zur Abdichtung gegen die Außenseite der Mauer eingerichtet und der andere Flansch zum axialen Verpressen der Packung innerhalb des Mauerdurchbruchs verschiebbar angeordnet und gegen den axialen Druck der Packung abgestützt ist, wozu zwischen diesem Flansch und dem Futterrohr eine Sperreinrichtung vorgesehen ist, die Verschiebungen des Flansches auf dem Futterrohr nur in Richtung zur Packung hin ermöglicht, den Flansch gegen Verschiebung in entgegengesetzter Richtung aber sperrt.

Mauerdurchführungen dieser Art sind aus der nicht zum vorveröffentlichten Stand der Technik gehörenden Patentanmeldung DE 37 31 583 bekannt. Bei ihnen steht der innere Flansch unter der Kraft einer Feder, die den Flansch gegen die Packung drückt, damit die Packung im Mauerdurchbruch gestaucht wird und das Futterrohr gegen die Leibung des Mauerdurchbruchs abdichtet. Dazu ist die zunächst gespannte Feder zu entsperren, damit sie sich entspannen und dabei die Packung beaufschlagen kann. Im einzelnen erfolgt diese Entsperrung in der Weise, daß ein die Packung zum Flansch hin abschließender, dem Flansch anliegender Packungsring am Futterrohr gegen die Kraft der Feder in einem Rastsitz gehalten ist, aus dem sich der Packungsring nur löst, wenn er aufgespreizt wird, was mit Hilfe einer außen vor dem äußeren Flansch vorgesehenen Spannmutter möglich ist, die in einem auf dem Futterrohr vorhandenen Außengewinde verschraubbar ist. Nachteilig bei dieser Ausführungsform ist der Umstand, daß beim Verschrauben der Spannmutter nicht von außen erkennbar ist, ob der Packungsring den inneren Flansch und damit die Feder wirklich entsperrt und die Feder sich entsprechend entspannt hat, die Packung also ausreichend gestaucht worden ist.

Der Erfindung liegt die Aufgabe zugrunde, eine Mauerdurchführung der eingangs genannten Art so auszubilden, daß die Packung in genau kontrollierbarer Weise und bezüglich des Umfangs ganz nach Wunsch gestaucht werden kann.

Diese Aufgabe wird nach der Erfindung dadurch gelöst, daß der innerhalb des Mauerdurchbruchs befindliche Flansch an ein Zugmittel angeschlossen ist, das zwischen dem Futterrohr einerseits und der Packung sowie dem äußeren Flansch andererseits abgedichtet und axial beweglich nach außen geführt ist und auf der Außenseite vor dem äußeren Flansch zugänglich ist.

Durch Zug von Hand am von außen zugänglichen Zugmittel kann der innere Flansch gegen die Packung bewegt und dabei die Packung gestaucht werden, wobei der Weg, um den-, und die Kraft, mit der die Stauchung erfolgt, nach Wunsch genau über den Zugweg und die Zugkraft des Zugmittels bemessen und kontrolliert werden können. Darüber hinaus ist die erfindungsgemäße Mauerdurchführung von wesentlich einfacherem Aufbau, da die Feder und die Entsperreinrichtung für die Feder entfallen.

Vorzugsweise ist das Zugmittel ein Band, das dem Futterrohr flach anliegt. Ist das Band dünn, beispielsweise aus reißfestem Kunststoff, trägt es entsprechend wenig am Futterrohr auf und beeinträchtigt nicht die Dichtwirkung der Packung.

Eine besonders einfache und sichere Handhabung des Zugmittels ergibt sich dann, wenn nach einem weiteren Vorschlag der Erfindung das Zugmittel in einer Schlaufe geführt ist, wobei die beiden Zugmittelenden an den Flansch angeschlossen sind und der Schlaufenscheitel vor dem äußeren Flansch liegt. Die Zugmittelenden sind zweckmäßig an einander diametral gegenüberliegenden Stellen an den inneren Flansch angeschlossen und verlaufen, diametral sich gegenüberliegend, axial auf dem Futterrohr.

Es empfiehlt sich, die Anordnung im übrigen so zu treffen, daß das Zugmittel in einem Rastsitz am inneren Flansch gehalten ist und der Rastsitz sich löst und das Zugmittel freigibt, wenn die Zugkraft des Zugmittels eine vorgegebene Größe überschreitet. Statt dessen oder zusätzlich besteht auch die Möglichkeit, daß das Zugmittel dicht vor dem inneren Flansch eine Sollbruchstelle aufweist, die reißt, wenn die Zugkraft des Zugmittels eine vorgegebene Größe überschreitet. In jedem Fall wird dadurch erreicht, daß das Zugmittel nach dem Lösen aus dem Rastsitz bzw. Reißen der Sollbruchstelle völlig aus der Mauerdurchführung herausgezogen werden kann, bevor die mit Hilfe des inneren Flansches vorgestauchte Packung endgültig von außen verspannt wird. Ist zur Durchführung dieser abschließenden Verspannung der äußere Flansch gegen eine Spannmutter abgestützt, die auf einem auf dem Futterrohr vorgesehenen Außengewinde verschraubbar ist, so ist eine bevorzugt Ausführungsform dadurch gekennzeichnet, daß das Futterrohr im Bereich des Außengewindes außenseitig eine Längsnut aufweist in der das Zugmittel verläuft. Das Zugmittel ist zweckmäßig dem Profilquerschnitt der Längsnut angepaßt und füllt den Nutquerschnitt aus.

Die Sperreinrichtung, welche Verschiebungen des inneren Flansches in von der Packung abgewandter Richtung verhindert, ist zweckmäßig in der Weise ausgebildet, daß der innere Flansch bezüglich seines Umfangs axial geschlitzt und dadurch im Durchmesser federnd aufspreizbar ist, daß auf dem Futterrohr über den Verschiebungsbereich des Flansches neben einander liegende Ringnuten von sägezahnförmigem Profil vorgesehen sind, wobei die steile Zahnbrust des Profils der Packung zugewandt ist, und daß der Flansch einen in die Ringnuten eingreifenden Ringsteg mit den Ringnuten entsprechendem Sägezahnprofil aufweist. Die die Packung stauchende Bewegung des Flansches mit Hilfe des Zugmittels bleibt durch die so ausgebildete Sperreinrichtung unbehindert. Im folgenden wird die Erfindung an einem in der Zeichnung dargestellten Ausführungsbeispiel näher erläutert; es zeigen:

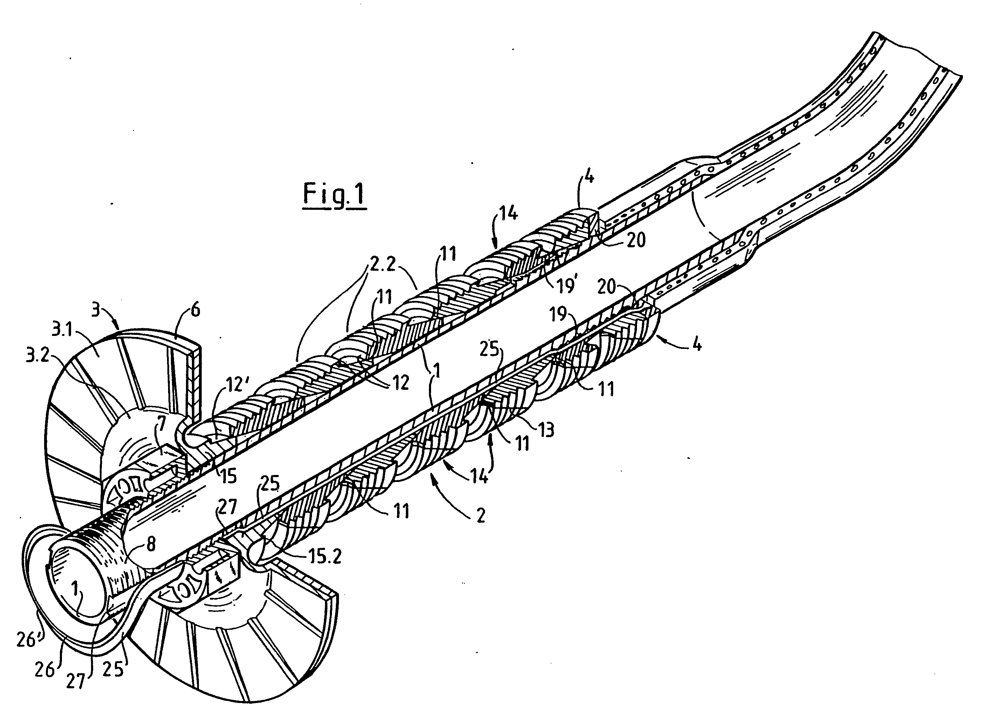

Fig. 1 eine Mauerdurchführung nach der Erfindung in einer Schrägansicht, teils im Schnitt,

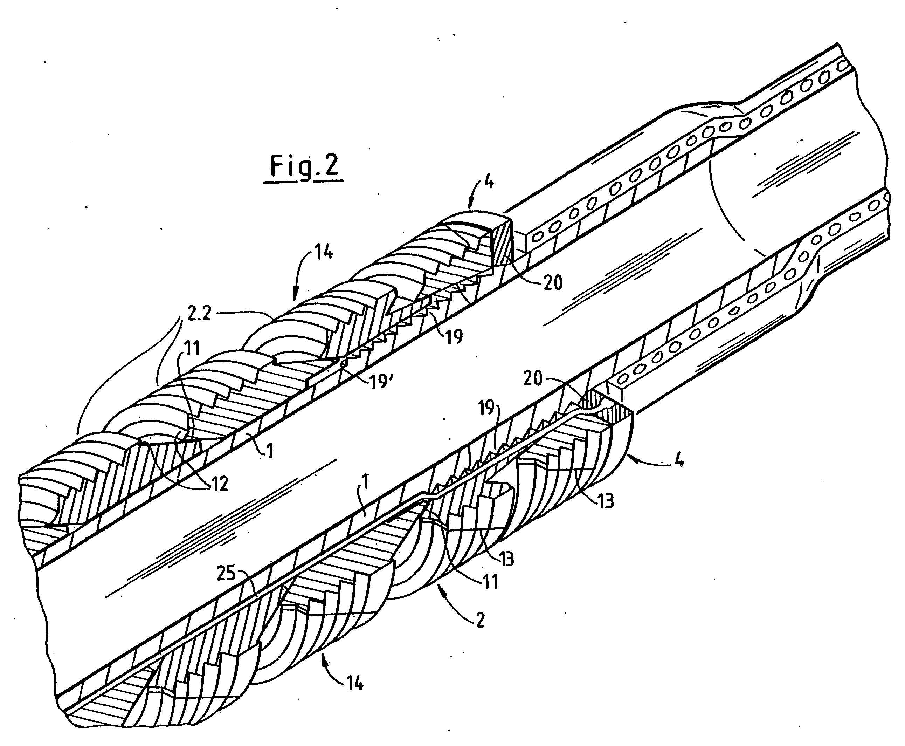

Fig. 2 die Durchführung nach Fig. 1 in einer vergrößerten Teildarstellung, und

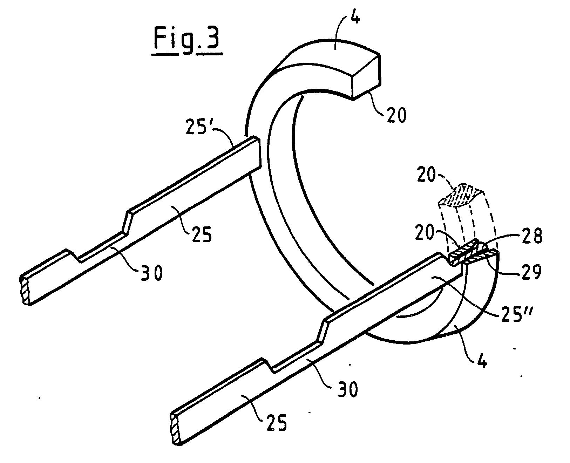

Fig. 3 eine Schrägansicht eines Teils des inneren Flansches und des daran angeschlossenen Zugmittels, teils geschnitten, in einer gegenüber Fig. 2 etwas vergrößerten Darstellung.

Die in der Zeichnung dargestellte Mauerdurchführung für nicht gezeichnete Leitungen, wie Kabel, Rohre oder dergleichen, besitzt ein Futterrohr 1, das in einen vorzugsweise als Bohrung ausgeführten Mauerdurchbruch einer in der Zeichnung nicht dargestellten Mauer eingesetzt wird. Die Mauerdurchführung besitzt eine den Ringraum zwischem dem Futterrohr 1 und der Laibung des Mauerdurchbruchs ausfüllende Packung 2 und zwei beidseits dieser Packung 2 außen auf dem Futterrohr 1 sitzende Flansche 3, 4. Von diesen beiden Flanschen ist der in der Zeichnung linke Flansch 3 zur Abdichtung gegen die Außenseite der Mauer eingerichtet, wozu er eine den Querschnitt des Mauerdurchbruchs überall radial übergreifende Größe besitzt und auf seiner der Mauer zugewandten Seite mit einer klebenden oder selbstverschweißenden Dichtmasse 6 beschichtet ist, die sich dichtend mit der Oberfläche der Mauer, beispielsweise einem dort vorgesehenen Dichtanstrich oder einer Dichtbahn wasser- und gasdicht verbinden kann. Der Flansch 3 ist auf dem Futterrohr 1 längsverschiebbar angeordnet und an einer Spannmutter 7 axial abgestützt, die in einem auf dem Futterrohr 1 vorgesehenen, vom linken Rohrende ausgehenden Außengewinde 8 verschraubbar ist. Der andere, in der Zeichnung rechte Flansch 4 dient zum axialen Stauchen der Packung 2 innerhalb des Mauerdurchbruchs und ist im Mauerdurchbruch zumindest über einen Teil der Durchbruchslänge verschiebbar, wobei er aber immer gegen den axialen Druck der Packung 2 in noch zu beschreibender Weise am Futterrohr 1 abgestützt ist. Die Packung 2 besteht aus einer Reihe von im Durchmesser spreizbaren Packungsringen 2.2, die über koaxiale Kegelflächen 11 mit einem die Selbsthemmung vermeidenden Kegelwinkel gegeneinander abgestützt sind und sich beim Verpressen der Packung 2 an den Kegelflächen axial zusammenschieben und dabei radial erweitern. Die Kegelflächen 11 enden an ihrem im Durchmesser größeren Ende jeweils in einer radial nach außen über die Kegelfläche vorstehenden Ringschulter 12, an der sie aneinander zur Anlage kommen, wenn sie sich in ihren Kegelflächen 11 vollständig zusammengeschoben haben. Damit sie dabei in den Ringschultern 12 nicht von einander abrutschen können, sind die Ringschultern benachbarter Packungsringe zum radial formschlüssigen Eingriff aneinander eingerichtet, was im Ausführungsbeispiel dadurch erzielt wird, daß die Ringschulter an der Kegelaußenfläche schwalbenschwanzartig hinterschnitten und die Ringschulter an der Kegelinnenfläche mit einem in die Hinterschneidung greifenden, axial vorstehenden Schwalbenschwanzprofil ausgestattet ist. Die Packungsringe sind axial geschlitzt, um ihr radiales Aufspreizen zu ermöglichen. Dabei sind die Schlitze 13 benachbarter Packungsringe in Umfangsrichtung gegeneinander versetzt. Im Ergebnis werden axial über die gesamte Packungslänge durchgehende Schlitze vermieden. Die Packungsringe 2 sind weiter an ihrer äußeren Umfangsfläche mit einer in Umfangsrichtung verlaufenden Oberflächenprofilierung 14 versehen, die im Ausführungsbeispiel als spitzzahnige Rillierung ausgebildet ist. Diese Oberflächenprofilierung 14 sorgt für einen guten Kraftschluß der im Mauerdurchbruch verpreßten Packung 2 mit der Wandung des Mauerdurchbruchs.

Der auf der Seite der Spannmutter 7 erste Packungsring 2 besitzt eine sich zur Spannmutter hin öffnende Kegelinnenfläche, in die ein mit einer entsprechenden Kegelaußenfläche versehener Kragen 15 greift, der axial gegen die Packung 2 verspannbar ist. Auch die Kegelaußenfläche 15 dieses Kragens 15 endet spannmutterseitig in einer radial über die Kegelaußenfläche vorstehenden Ringschulter 15.2, die an einer Ringschulter 12 des Packungsringes 2 zur Anlage kommen kann und dann verhindert, daß sich der Kragen 15 und der ihm anliegende erste Packungsring 2 zu weit übereinander schieben können. Der Kragen 15 ist axial an der Spannmutter 7 abgestützt und als Teil des spannmutterseitigen äußeren Flansches 3 ausgebildet. Der Flansch 3 besitzt eine zur Anlage an der Maueraußenseite bestimmte äußere Ringscheibe 3.1, die den Kragen 15 mit Abstand umgibt, und ist mit dem Kragen 15 dichtschließend durch ein Ringteil 3.2 verbunden, das durch eigene Verformung Verstellungen des Kragens 15 und der Ringscheibe 3.1 gegeneinander ermöglicht, so daß sich die Ringscheibe 3.1 auch dann über ihren ganzen Umfang der Wandaußenseite anlegen kann, wenn die Achse des Futterrohrs 1 nicht senkrecht zur Wandaußenseite stehen sollte. Das Ringteil 3.2 ist im Querschnitt als Rinnenprofil ausgebildet und mit dem Kragen 15 und der Ringscheibe 3.1 einstückig aus Gummi oder einem anderen geeigneten elastomeren Kunststoff hergestellt. Diese Werkstoffwahl ermöglicht es auch der Ringscheibe, sich beispielsweise einer nicht absolut planen Wandaußenseite über den gesamten Umfang dichtend anzulegen. Wird der Kragen 15 gegen die Packung 8 gedrückt, erfährt er in der Kegelinnenfläche des Packungsringes 2 eine radial einwärts gerichtete Verspannung gegen das Futterrohr 1, wodurch sich der Dichtschluß zwischen dem Flansch 3 und dem Futterrohr 1 ergibt.

Zwischen dem Futterrohr 1 und dem im Mauerdurchbruch verschiebbaren Flansch 4 ist eine Sperreinrichtung vorgesehen, die Verschiebungen des Flansches 4 auf dem Futterrohr 1 nur in Richtung zur Packung 2 und zum äußeren Flansch 3 hin ermöglicht, den Flansch 4 gegen Verschiebungen in entgegengesetzter Richtung aber sperrt. Der innere Flansch 4 liegt in Richtung seiner Verschiebbarkeit am rechten letzten Packungsring 2 an. Er ist bezüglich seines Umfangs axial geschlitzt und läßt sich dadurch im Durchmesser federnd aufspreizen. Auf dem Futterrohr 1 sind über den Verschiebungsbereich des Flansches 4 nebeneinander liegende Ringnuten 19 vorgesehen, die sägezahnförmiges Profil besitzen, wobei die steile, in einer zur Futterrohrachse senkrechten Ebene liegende Zahnbrust 19' des Profils dem äußeren Flansch 3 und der Spannmutter 7 zugewandt ist. Der Flansch 4 besitzt an seiner inneren Umfangsfläche einen in die Ringnut 19 eingreifenden Ringsteg 20 mit den Ringnuten 19 entsprechendem Sägezahnprofil. Im Ergebnis kann der Flansch 4 in der Zeichnung nach links verschoben werden, wobei er sich über die geneigten Zahnflanken jeweils aufspreizt, bis er über die Zahnbrust 19' in die nächste Ringnut 19 einspringt. Ein entsprechendes Bewegen des Flansches 4 in entgegengesetzter Richtung, in der Zeichnung also nach rechts, verhindert dagegen die steile Zahnbrust 19'.

Der innere Flansch 4 ist an ein Zugmittel 25 angeschlossen, das zwischen dem Futterrohr 1 einerseits und der Packung 2 sowie dem äußeren Flansch 3 andererseits abgedichtet und axial beweglich nach außen geführt ist, so daß es auf der Außenseite vor dem äußeren Flansch 3 und der Spannmutter 7 zugänglich ist. Das Zugmittel 25 ist ein Band, das dem Futterrohr 1 flach anliegt. Es ist in einer Schlaufe geführt, wobei die beiden Zugmittelenden 25', 25" an den Flansch 4 angeschlossen sind und der Schlaufenscheitel 26' vor dem äußeren Flansch 3 und der Spannmutter 8 liegt. Die Zugmittelenden 25', 25" sind an einander diametral gegenüberliegenden Stellen an den inneren Flansch 4 angeschlossen. Sie verlaufen im übrigen, diametral sich gegenüberliegend, axial auf dem Futterrohr 1, bis sie in den freiliegenden Schlaufenteil 26 übergehen. Das Zugmittel 25 ist in einem Rastsitz am inneren Flansch 4 gehalten. Dieser Rastsitz ist von einem Rastkopf 28 am Zugmittelende 25', 25" und einer sich federnd öffnenden und dann den Rastkopf freigebenden Rastaufnahme 29 am Flansch 4 gebildet, wobei die Rastaufnahme 29 den Rastkopf 28 dann freigibt, wenn die Zugkraft des Zugmittels 25 eine vorgegebene Größe überschreitet. An Stelle des Rastsitzes oder auch zusätzlich kann das Zugmittel 25 dicht vor dem inneren Flansch 4 eine Sollbruchstelle 30 aufweisen, die reißt, wenn die Zugkraft des Zugmittels 25 eine vorgebene Größe überschreitet. Im Bereich des Außengewindes 8 ist das Futterrohr 1 außenseitig mit einer Längsnut 27 versehen, in der das Zugmittel 25 unter der Spannmutter 7 hindurch verläuft. Das Zugmittel ist in seinem Profil im wesentlichen dem Profilquerschnitt der Längsnut 27 angepaßt und füllt den Nutquerschnitt aus.

Die in den Mauerdurchbruch eingesetzte Mauerdurchführung wird so ausgerichtet, daß der äußere Flansch 3 der Wandaußenfläche anliegt. In dieser Lage wird mittels Zug am Zugmittel 25 der innere Flansch 4 axial gegen die Packung 2 bewegt, wobei sich die Packungsringe 2 axial übereinander schieben und die Packung 2 im Ergebnis gestaucht wird. Ist dadurch die Packung 2 im Mauerdurchbruch genügend vorgestaucht, kann eine weitere Zugkrafterhöhung am Zugmittel 25 dazu führen, daß sich die Zugmittelenden 25', 25" vom inneren Flansch 4 lösen und das Zugmittel 25 vollständig aus der Mauerdurchführung herausgezogen werden kann. Die abschließende Verspannung der Mauerdurchführung erfolgt mit Hilfe der Spannmutter 7, bei deren Anzug das Futterrohr 1 zwischen dem äußeren Flansch und dem inneren Flansch 4 als Zuganker dient, so daß die beiden Flansche 3, 4 weiter gegen einander angenähert und dadurch die Packung abschließend im Mauerdurchbruch verspannt wird.

## Ansprüche

1. Mauerdurchführung für Leitungen, wie Kabel, Rohre oder dergleichen, zum Einsetzen in einen Mauerdurchbruch, mit einem den Mauerdurchbruch durchgreifenden Futterrohr (1), einer Packung (2) zum Ausfüllen des Ringraumes zwischen dem Futterrohr (1) und der Wandung des Mauerdurchbruchs und mit zwei axial beidseits der Packung (2) auf dem Futterrohr (1) sitzenden Flanschen (3,4), von denen der eine Flansch (3) außerhalb des Mauerdurchbruchs angeordnet und zur Abdichtung gegen die Außenseite der Mauer eingerichtet und der andere Flansch (4) zum axialen Verpressen der Packung (2) innerhalb des Mauerdurchbruchs verschiebbar angeordnet und gegen den axialen Druck der Packung (2) abgestützt ist, wozu zwischen diesem Flansch (4) und dem Futterrohr (1) eine Sperreinrichtung vorgesehen ist, die Verschiebungen des Flansches (4) auf dem Futterrohr (1) nur in Richtung zur Packung (2) hin ermöglicht, den Flansch (4) gegen Verschiebung in entgegengesetzter Richtung aber sperrt, dadurch gekennzeichnet, daß der innerhalb des Mauerdurchbruchs befindliche Flansch (4) an ein Zugmittel (25) angeschlossen ist, das zwischen dem Futterrohr (1) einerseits und der Packung (2) sowie dem äußeren Flansch (3) andererseits abgedichtet und axial beweglich nach außen geführt ist und auf der Außenseite vor dem äußeren Flansch (3) zugänglich ist.

2. Mauerdurchführung nach Anspruch 1, dadurch gekennzeichnet, daß das Zugmittel (25) ein Band ist, das dem Futterrohr (1) flach anliegt.

3. Mauerdurchführung nach Anspruch 1 oder 2, dadurch gekennzeichnet, daß das Zugmittel (25) in einer Schlaufe (26) geführt ist, wobei die beiden Zugmittelenden (25′, 25″) an den Flansch (4) angeschlossen sind und der Schlaufenscheitel (26′) vor dem äußeren Flansch (3) liegt.

4. Mauerdurchführung nach Anspruch 3, dadurch gekennzeichnet, daß die Zugmittelenden (25′, 25″) an einander diametral gegenüberliegenden Stellen an den inneren Flansch (4) angeschlossen sind und, diametral sich gegenüber liegend, axial auf dem Futterrohr (1) verlaufen.

5. Mauerdurchführung nach einem der Ansprüche 1 bis 4, dadurch gekennzeichnet, daß das Zugmittel (25) in einem Rastsitz am inneren Flansch (4) gehalten ist und der Rastsitz sich löst und das Zugmittel freigibt, wenn die Zugkraft des Zugmittels eine vorgegebene Größe überschreitet.

6. Mauerdurchführung nach einem der Ansprüche 1 bis 4, dadurch gekennzeichnet, daß das Zugmittel (25) dicht vor dem inneren Flansch (4) eine Sollbruchstelle (30) aufweist, die reißt, wenn die Zugkraft des Zugmittels (25) eine vorgegebene Größe überschreitet.

7. Mauerdurchführung nach einem der Ansprüche 1 bis 6, wobei der äußere Flansch (3) gegen eine Spannmutter (7) abgestützt ist, die auf einem auf dem Futterrohr (1) vorgesehenen Außengewinde (8) verschraubbar ist, dadurch gekennzeichnet, daß das Futterrohr (1) im Bereich des Außengewindes (8) außenseitig eine Längsnut (27) aufweist, in der das Zugmittel (25) verläuft.

8. Mauerdurchführung nach Anspruch 7, dadurch gekennzeichnet, daß das Zugmittel (25) dem Profilquerschnitt der Längsnut (27) angepaßt ist und den Nutquerschnitt ausfüllt.

9. Mauerdurchführung nach einem der Ansprüche 1 bis 8, dadurch gekennzeichnet, daß der innere Flansch (4) bezüglich seines Umfangs axial geschlitzt und dadurch im Durchmesser federnd aufspreizbar ist, daß auf dem Futterrohr (1) über dem Verschiebungsbereich des Flansches (4) nebeneinander liegende Ringnuten (19) von sägezahnförmigem Profil vorgesehen sind, wobei die steile Zahnbrust (19.1) des Profils der Packung (2) zugewandt ist, und daß der Flansch (4) einen in die Ringnuten (19) eingreifenden Ringsteg (20) mit den Ringnuten (19) entsprechendem Sägezahnprofil aufweist.

Fig.1

EP 0 336 006 A2

Fig.2

Fig.3